**Europäisches Patentamt**

**European Patent Office**

**Office européen des brevets**

(11) Veröffentlichungsnummer: **0 017 017**
**A1**

(12) **EUROPÄISCHE PATENTANMELDUNG**

(21) Anmeldenummer: **80101217.0**

(22) Anmeldetag: **10.03.80**

(51) Int. Cl.³: **B 65 H 75/44,** B 65 H 75/34, A 47 L 9/26, H 02 G 11/02, G 01 B 3/10

(30) Priorität: **23.03.79 DE 2911506**

(43) Veröffentlichungstag der Anmeldung: **15.10.80** **Patentblatt 80/21**

(84) Benannte Vertragsstaaten: **AT DE FR NL SE**

(71) Anmelder: **SIEMENS AKTIENGESELLSCHAFT Berlin und München, Postfach 22 02 61, D-8000 München 22 (DE)**

(72) Erfinder: **Lins, Felix, Sandstrasse 15, D-8741 Niederlauer (DE)**
Erfinder: **Ehrlich, Eberhard, Nordlandstrasse 21, D-8740 Bad Neustadt/S. (DE)**

(54) Bremsanordnung für eine in einem Gehäuse eingebaute Kabeltrommel.

㊄ Die Bremsordnung weist ein in einer im Gehäuse vorgesehenen Kabelauslaßöffnung (3) verstellbar angeordnetes und unter dem Einfluß der Zugkraft der Kabeltrommel (1) eine, Selbsthemmung bewirkendes Bremsglied auf. Dieses Bremsglied kann beim Aufwickeln des Kabels (2) mittels einer Auslösevorrichtung aus seiner Bremsstellung gelöst werden. Um die Reibung zwischen dem Bremsglied und dem Kabel (2) beim Herausziehen des Kabels zu vermindern, wird vorgeschlagen, daß das Bremsglied aus einer mit einer Keilnut versehenen Rolle (5) besteht. Diese Rolle (5) liegt z.B. unter Schwerkraftwirkung an dem Kabel (2) an und wird beim Abwickeln des Kabels (2) von diesem wegbewegt und beim Aufwickeln an dieses angepreßt.

SIEMENS AKTIENGESELLSCHAFT       Unser Zeichen
Berlin und München              VPA 79 P 3 0 4 3 EUR


Bremsanordnung für eine in einem Gehäuse eingebaute
Kabeltrommel


Die Erfindung bezieht sich auf eine Bremsanordnung für
eine in einem Gehäuse eingebaute Kabeltrommel, die ein
in einer im Gehäuse vorgesehenen Kabelauslaßöffnung verstellbar angeordnetes und unter dem Einfluß der Zugkraft
der Kabeltrommel eine Selbsthemmung bewirkendes Bremsglied aufweist, dessen Bremsstellung mittels einer Auslösevorrichtung beim Aufwickeln entriegelbar ist.


Eine solche Bremsanordnung ist durch die DE-PS 880 392
bekannt. Als Bremsglied ist dort ein zweiarmiger Hebel
vorgesehen, der unter Federwirkung an dem Kabel anliegt.
Dies hat zur Folge, daß auch beim Abwickeln des Kabels
von der Kabeltrommel der Bremshebel mit seinem einen
Arm stets an dem Kabel anliegt, so daß beim Herausziehen
des Kabels eine relativ starke Reibung zwischen dem betreffenden Arm des Bremshebels und dem Kabel auftritt.


Ml 2 Syr / 21.3.1979

Der Erfindung liegt die Aufgabe zugrunde, eine Bremsanordnung der eingangs beschriebenen Art so auszubilden,
daß die Reibung zwischen dem Bremsglied und dem Kabel
beim Abwickeln des Kabels wesentlich vermindert ist.

Die Lösung der gestellten Aufgabe gelingt nach der Erfindung dadurch, daß das Bremsglied aus einer mit einer
Keilnut versehenen Rolle besteht, die durch Kontakt
zwischen ihr und dem Kabel beim Abwickeln von diesem weg
bewegbar und beim Aufwickeln an dieses anpreßbar ist.
Das Kabel läuft in der Keilnut der Rolle und hebt diese
beim Herausziehen des Kabels an bzw. zieht diese beim
Aufwickeln in die Sperrstellung. Die Rolle selbst liegt
nur mit ihrem Eigengewicht an dem Kabel an, so daß sich
nur eine geringe Reibung ergibt.

Eine vorteilhafte Ausführungsform der Bremsanordnung besteht darin, daß die Rolle durch exzentrische Lagerung
verschwenkbar angeordnet ist. Die exzentrische Lagerung
ist so gestaltet, daß die Rolle beim Herausziehen des
Kabels von diesem weggeschwenkt wird und dann nur noch
mit ihrem Eigengewicht an dem Kabel anliegt. Wird das
Abwickeln beendet, so wird das Kabel durch die Zugkraft
der Kabeltrommel wieder etwas nach innen gezogen, wobei
die Rolle nach unten verschwenkt wird. Hierbei wird das
Kabel zwischen der Keilnut der Rolle und der unteren
Seite der Auslaßöffnung eingepreßt.

Eine weitere Verminderung der Reibung gelingt dadurch,
daß die Rolle in Längsschlitzen drehbar gelagert ist,
welche in Abwickelrichtung schräg ansteigen. Beim Abwickeln des Kabels bewegt sich die Rolle in den Längsschlitzen etwas in Abwickelrichtung und wird dabei durch
die Schräge der Längsschlitze gegenüber dem Kabel angehoben. Beim weiteren Abwickeln kann sich die Rolle in den
Längsschlitzen drehen, so daß zwischen der Rolle und dem
Kabel nur eine rollende Reibung auftritt.

0017017

Anhand eines in der Zeichnung dargestellten Ausführungsbeispieles wird der Anmeldungsgegenstand nachfolgend
näher beschrieben.

Es zeigt

Fig. 1 eine Bremsanordnung mit exzentrischer Lagerung
der Rolle,

Fig. 2 eine Stirnansicht der in Fig. 1 dargestellten
Bremsanordnung,

Fig. 3 eine Bremsanordnung mit einer in Längsschlitzen
drehbar gelagerten Rolle,

Fig. 4 eine Stirnansicht der in Fig. 3 dargestellten
Bremsanordnung und

Fig. 5 eine als gesondertes Teil ausgeführte Bremsanordnung.

Mit 1 ist jeweils eine selbstaufwickelnde Kabeltrommel
bezeichnet, auf der ein Kabel 2 aufgewickelt ist. In
einem nicht näher dargestellten, die Kabeltrommel aufnehmenden Gehäuse ist eine Kabelauslaßöffnung 3 vorgesehen. In dieser Kabelauslaßöffnung 3 ist eine mit einer
Keilnut 4 versehene Rolle 5 bzw. 6 angeordnet.

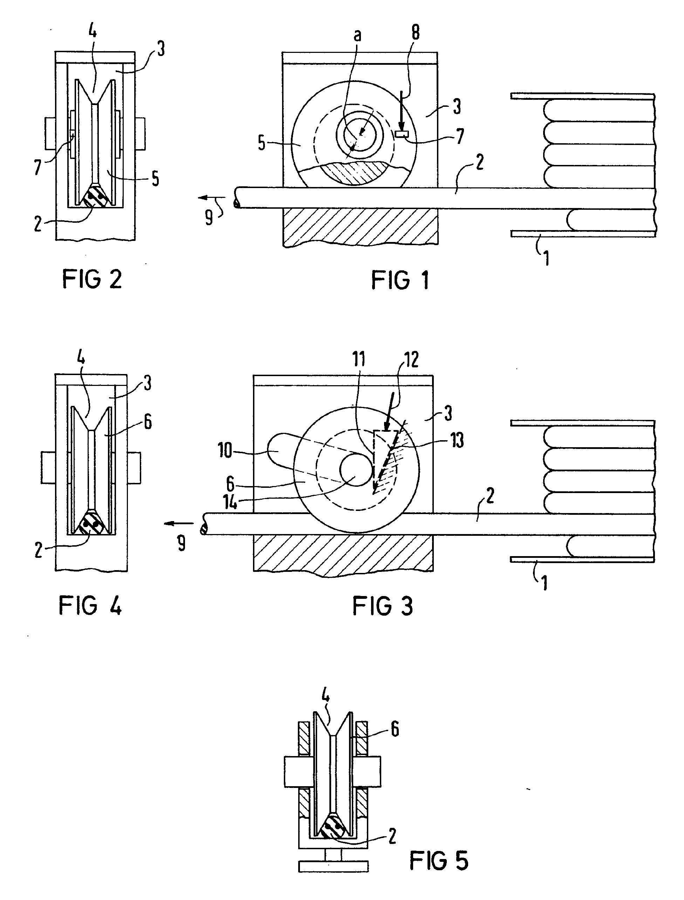

Bei dem in Fig. 1 dargestellten Ausführungsbeispiel ist
die Rolle 5 exzentrisch gelagert. Die Drehachse der
Rolle ist gegenüber der Mittenachse der Rolle um den
Abstand a versetzt. Zur Entriegelung der Rolle kann an
dieser ein seitlicher Vorsprung 7 vorgesehen werden, auf
den eine durch Pfeil 8 gekennzeichnete Auslösevorrichtung
einwirkt. Beim Betätigen der Auslösevorrichtung in Richtung des Pfeiles 8 wird die Rolle 5 von dem Kabel 2 weggeschwenkt und dieses für das Aufwickeln auf die Kabeltrommel 1 freigegeben. Desgleichen wird die Rolle 5 beim
Abwickeln des Kabels 2 in der durch einen Pfeil 9 gekennzeichneten Abwickelrichtung infolge ihrer exzentrischen Lagerung etwas angehoben, so daß das Kabel 2 von
der Kabeltrommel 1 abgezogen werden kann. Die Rolle 5 liegt hierbei lediglich infolge der Schwerkraft an dem Kabel 2 an. Hierdurch ergibt sich nur eine geringe Reibung zwischen der Rolle 5 und dem Kabel 2.

Bei dem weiteren Ausführungsbeispiel nach Fig. 3 ist die Rolle 6 in Längsschlitzen 10 drehbar gelagert. Die Längsschlitze 10 befinden sich in den Seitenwänden der Kabelauslaßöffnung 3 und verlaufen in Abwickelrichtung des Kabels 2 schräg ansteigend. Die Entriegelung der Rolle 6 aus der Bremsstellung kann beispielsweise durch einen gestrichelt dargestellten Keil 11 erfolgen, der durch eine in Richtung des Pfeils 12 auf diesen wirkende Auslösevorrichtung zwischen eine gehäusefeste Abstützung 13 und die Achse 14 der Rolle 6 geschoben wird. Hierdurch wandert die Rolle in den schräg ansteigenden Längsschlitzen 10 ein kleines Stück in Abwickelrichtung des Kabels 2 und wird dabei von dem Kabel 2 abgehoben, das nunmehr ungehindert auf die Kabeltrommel 1 aufgewickelt werden kann. Beim Herausziehen des Kabels 2 aus der Kabelauslaßöffnung 3 wird die Rolle 6 ebenfalls in Abwickelrichtung mitgenommen und infolge der Schräge der Längsschlitze 10 gegenüber dem Kabel 2 angehoben. Beim weiteren Herausziehen des Kabels 2 kann sich die Rolle 6 in den Längsschlitzen 10 frei drehen, so daß zwischen dem Kabel 2 und der Rolle 6 lediglich eine rollende Reibung besteht. Hierdurch ist der Abrieb an dem Kabel auf ein Minimum reduziert.

Die Bremsanordnung kann auch als gesondertes Teil, wie dies in Fig. 5 dargestellt ist, ausgeführt werden. Ein solches gesondertes Teil wird dann an dem die Kabeltrommel 1 aufnehmenden Gehäuse an geeigneter Stelle befestigt.

0017017

79 P 3043 EUR

Patentansprüche

1. Bremsanordnung für eine in einem Gehäuse eingebaute Kabeltrommel, welche Anordnung ein in einer im Gehäuse vorgesehenen Kabelauslaßöffnung verstellbar angeordnetes und unter dem Einfluß der Zugkraft der Kabeltrommel eine Selbsthemmung bewirkendes Bremsglied aufweist, dessen Bremsstellung mittels einer Auslösevorrichtung beim Aufwickeln entriegelbar ist, d a d u r c h   g e k e n n - z e i c h n e t ,   daß das Bremsglied aus einer mit einer Keilnut (4) versehenen Rolle (5 bzw. 6) besteht, die durch Kontakt zwischen ihr und dem Kabel (2) beim Abwickeln von diesem weg bewegbar und beim Aufwickeln an dieses anpreßbar ist.

2. Bremsanordnung nach Anspruch 1,   d a d u r c h g e k e n n z e i c h n e t ,   daß die Rolle (5) durch exzentrische Lagerung verschwenkbar angeordnet ist.

3. Bremsanordnung nach Anspruch 1,   d a d u r c h g e k e n n z e i c h n e t ,   daß die Rolle (6) in Längsschlitzen (10) drehbar gelagert ist, welche in Abwickelrichtung schräg ansteigen.

FIG 2    FIG 1

FIG 4    FIG 3

FIG 5

## EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------------------|-------------------|
| X | DE - B2 - 2 025 798 (MANUFACTURE QUENOT MABO S.A.) <br> * Spalte 6, Zeilen 5 bis 38 * <br> -- | 1,3 |
| | DE - A1 - 2 641 800 (N.V. PHILIPS' GLOEILAMPENFABRIEKEN) <br> * Fig. 2 * <br> -- | 1,3 |
| | DE - C - 1 019 094 (FISCO LTD.) <br> * Fig. 4, 5 * <br> -- | 1,3 |
| | GB - A - 1 275 729 (FISCO PRODUCTS LTD.) <br> * Fig. 2, 3 * <br> -- | 1,3 |
| D,A | DE - C - 880 392 (LICENTIA PATENT- VERWALTUNGS-GMBH) <br> -- | |
| A | DE - U - 7 034 010 (FELTEN & GUILLEAUME KABELWERKE) <br> * Fig. 2 * <br> -- | 2 |
| A | US - A - 3 329 045 (C.R. SELLEN et al.) <br> * Anspruch 2 * <br> -- | 2 |
| A | GB - A - 1 356 300 (RABONE CHESTERMAN LTD.) <br> * Fig. 2 * <br> ---- | |

### KLASSIFIKATION DER ANMELDUNG (Int.Cl.)

B 65 H   75/44
B 65 H   75/34
A 47 L   9/26
H 02 G   11/02
G 01 B   3/10

### RECHERCHIERTE SACHGEBIETE (Int.Cl.)

A 47 L   9/26
A 61 B   19/00
A 61 C   19/00
A 61 G   15/00
B 65 H   75/00
G 01 B   3/10
H 02 G   1/18
H 02 G   11/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---------------|------------------------------|--------|
| Berlin | 23-04-1980 | BITTNER |

EPA form 1503.1  06.78